# FASCICULE DE BREVET EUROPEEN

(11) **EP 3 792 469 B1**
(45) Date de publication et mention de la délivrance du brevet: **20.04.2022**
(21) Numéro de dépôt: 20195581.2
(22) Date de dépôt: 10.09.2020
(51) Int. Cl.: F02C 7/045, F02C 7/047

(54) **ENTRÉE D'AIR, NACELLE, ENSEMBLE PROPULSIF ET AÉRONEF À LÈVRE RAINURÉE**
LUFTEINLASS, GONDEL, ANTRIEBSEINHEIT UND LUFTFAHRZEUG MIT GERILLTER EINLASSLIPPE
AIR INTAKE, NACELLE, PROPULSION ASSEMBLY AND AIRCRAFT WITH GROOVED LIP

(30) Priorité: 12.09.2019 FR 1910046
(43) Date de publication de la demande: 17.03.2021
(73) Titulaire: AIRBUS OPERATIONS (S.A.S.), 31060 Toulouse (FR)
(72) Inventeur: BOURHIS, Arnaud, 31060 TOULOUSE Cedex 9 (FR); ALBET, Gregory, 31060 TOULOUSE Cedex 9 (FR); PONS, François, 31060 TOULOUSE Cedex 9 (FR)
(74) Mandataire: Sarraméa, Claude

(56) Documents cités:
- EP-A2- 2 578 496
- EP-B1- 2 578 496
- FR-A1- 2 917 067
- FR-A1- 2 976 557
- FR-A1- 3 070 674

## Description

L'invention concerne une entrée d'air de nacelle d'aéronef. Plus précisément, l'invention est centrée sur la lèvre d'une telle entrée d'air.

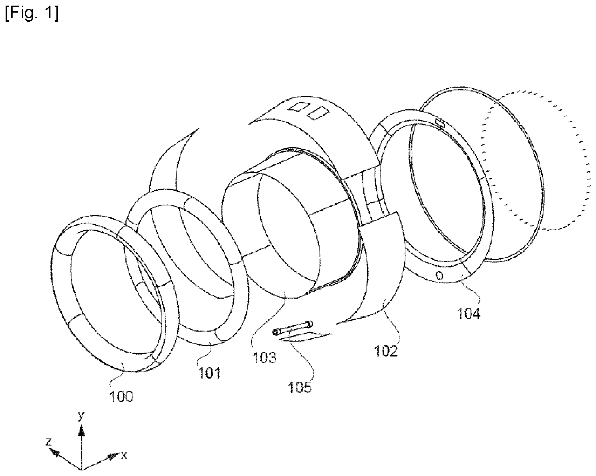

De façon conventionnelle, une entrée d'air de nacelle d'aéronef, telle celle illustrée à la figure 1 annexée, comprend des éléments de structure dont un cadre avant 101 et un cadre arrière 104 ainsi que, de l'avant vers l'arrière de la nacelle, une lèvre 100 portée par le cadre avant, des panneaux externes 102 prolongeant la lèvre à l'extérieur de la nacelle, des panneaux internes 103 prolongeant la lèvre à l'intérieur de la nacelle et formant une surface intérieure délimitant un conduit intérieur permettant de canaliser l'air en direction du moteur, les panneaux externes 102 et internes 103 étant portés par le cadre avant 101 et le cadre arrière 104.

La lèvre 100 est habituellement constituée de plusieurs secteurs en aluminium reliés par des éclisses.

Dans toute la description, un panneau ou un secteur de lèvre est observé installé dans une entrée d'air d'aéronef. Les expressions "direction transversale" et "transversalement" font alors référence à une direction qui s'étend dans un plan transversal de l'entrée d'air, c'est-dire qui est orthogonale à l'axe central de l'entrée d'air (l'axe central de l'entrée d'air étant parallèle à l'axe X de la figure 1). L'expression "longitudinalement" fait référence à une direction qui peut être sensiblement parallèle à l'axe central de l'entrée d'air si l'entrée d'air peut être considérée localement comme étant cylindrique, ou qui peut être une génératrice de l'entrée d'air si celle-ci peut être considérée localement comme étant conique. Un "plan longitudinal" est un plan contenant l'axe central de l'entrée d'air.

La forme de l'entrée d'air et/ou les systèmes dont elle est équipée doivent permettre d'éviter la formation et/ou l'accumulation de glace ou givre, de limiter l'impact des nuisances sonores, d'assurer une fonction aérodynamique, et de prévenir la pénétration d'oiseaux dans le compartiment de soufflante contenant les systèmes moteurs.

La lèvre est dimensionnée en tenant compte des contraintes thermiques (formation de givre/glace et conséquence du dégivrage de son bord d'attaque), et des contraintes mécaniques qu'elle est amenée à subir durant la vie de l'avion (choc à l'oiseau, alternance chaud/froid etc...).

Pour atténuer les nuisances sonores, les panneaux internes 103 connus sont généralement composés par :
- une peau résistive qui forme la face visible du conduit intérieur de l'entrée d'air en aval de la lèvre, et dont l'objectif est d'absorber les ondes sonores ; à cette fin, la peau résistive est percée d'une multitude de trous de diamètre généralement compris entre 0,8 mm et 1,6 mm ; sur les panneaux antérieurs connus, ces trous sont formés sur toute la surface de la peau résistive ;
- un panneau acoustique de doublage, qui comprend (de l'intérieur vers l'extérieur de l'entrée d'air, c'est-à-dire dans une direction centrifuge)
   ▪ une âme en nid d'abeilles plaquée contre la peau résistive, laquelle âme participe à la fois à la tenue mécanique du panneau et à l'amortissement acoustique. L'épaisseur de l'âme détermine la fréquence acoustique amortie,
   ▪ une peau arrière ayant essentiellement pour fonction d'assurer la tenue structurale du panneau.

Par ailleurs, le dégivrage de l'entrée d'air est assuré par la provision de tubes longitudinaux de dégivrage 105 (voir fig. 1) amenant de l'air chaud depuis le moteur jusqu'au conduit à section en D que forment le cadre avant 101 et la lèvre 100.

Ainsi, on constate que, dans les nacelles connues, le traitement acoustique et le dégivrage sont découplés et indépendants. D'un côté, l'air chaud de dégivrage doit être en contact avec la lèvre pour dégivrer celle-ci ; d'un autre côté, la température d'air chaud nécessaire pour obtenir le dégivrage du bord d'attaque de la lèvre est trop élevée pour le matériau constitutif des panneaux acoustiques connus. Le dégivrage est donc restreint au conduit à section en D que forment la lèvre et le cadre avant (soit au mieux 40% de la longueur de l'entrée d'air), tandis que le traitement acoustique est restreint à la surface du conduit intérieur de l'entrée d'air qui s'étend en aval du cadre avant (soit au mieux 60% de la longueur de l'entrée d'air).

L'invention vise à augmenter la surface de traitement acoustique d'une entrée d'air et potentiellement la surface dégivrée.

Pour ce faire, l'invention propose une entrée d'air pour nacelle d'aéronef comprenant un cadre avant et une lèvre, qui forment ensemble un conduit à section en D recevant de l'air chaud. L'entrée d'air selon l'invention est caractérisée en ce que :
- le cadre avant est agencé en une position avancée à l'intérieur de la lèvre (par opposition aux lèvres antérieures où le cadre avant est positionné en bordure de la lèvre, à l'extrémité arrière de celle-ci) ;
- la lèvre présente des rainures dites rainures de dégivrage, chaque rainure de dégivrage communiquant avec le conduit à section en D, chaque rainure de dégivrage ayant une partie aval s'étendant en aval du cadre avant (c'est-à-dire derrière le cadre avant suivant la direction de l'axe central de l'entrée d'air),
- en aval du cadre avant et en dehors des rainures de dégivrage, la lèvre présente des zones perforées pourvues de trous d'absorption sonore.
- l'entrée d'air comprend un clinquant, qui recouvre et ferme de façon hermétique au moins la partie aval des rainures de dégivrage, le clinquant étant pourvu de trous d'absorption sonore en regard des zones perforées de la lèvre et étant plein en regard des rainures de dégivrage,
- l'entrée d'air comprend des panneaux acoustiques à l'intérieur de la lèvre en aval du cadre avant au moins en regard des zones perforées. La lèvre fait donc office, dans les zones perforées, de peau résistive pour les panneaux acoustiques.

Bien entendu, l'entrée d'air peut aussi comprendre des panneaux acoustiques sur la surface intérieure prolongeant la lèvre vers l'arrière, comme dans les entrées d'air de l'état de la technique.

Les rainures de dégivrage participent à la fonction de dégivrage, et ce en aval du cadre avant (alors que le dégivrage est limité au conduit à section en D et s'arrête donc au niveau du cadre avant dans les entrée d'air connues) : l'air chaud envoyé dans le conduit à section en D peut ensuite circuler dans les rainures de dégivrage puisque celles-ci communiquent avec le conduit à section en D.

Les zones perforées de la lèvre, que les ondes acoustiques peuvent traverser, participent au traitement acoustique, et ce, au niveau de la lèvre c'est-à-dire en amont de la surface intérieure (alors que le traitement acoustique est limité à la surface intérieure qui prolonge la lèvre vers l'arrière dans les entrées d'air connues). Ces ondes acoustiques qui traversent les zones perforées sont ensuite piégées par les panneaux acoustiques prévus sur les zones perforées de la lèvre en aval du cadre avant.

Ainsi, selon l'invention, la surface traitée acoustiquement s'étend au-delà de la surface intérieure, à l'intérieure de la lèvre. Un traitement acoustique peut ainsi être obtenu sur une longueur souhaitée, pouvant aller jusqu'à 85% de la longueur de l'entrée d'air (contre 60% dans l'art antérieur).

L'air chaud circulant dans les rainures de dégivrage en aval du cadre avant ne pénètre pas dans les panneaux acoustiques (et ne risque donc pas de les endommager) puisque les rainures de dégivrage et le clinquant forment des canaux de circulation d'air chaud qui sont fermés de façon hermétique en aval du cadre avant.

En outre, grâce à l'invention, le cadre avant est plus petit en raison de sa position avancée à l'intérieur de la lèvre (alors qu'il est positionné à l'extrémité aval de la lèvre dans les entrées d'air connues). Plus petit, le cadre avant est aussi moins lourd, de sorte que l'invention a également pour avantage de réduire la masse de l'entrée d'air. L'avancée du cadre avant et la réduction du conduit à section en D n'ont pas pour conséquence de réduire la longueur de dégivrage puisque l'air chaud envoyé dans le conduit à section en D circule ensuite dans les rainures de dégivrage de la lèvre en aval du cadre avant. La longueur dégivrée peut même être supérieure à celle des entrées d'air antérieures, selon la longueur des rainures de dégivrage.

Les rainures de dégivrage s'étendent de préférence jusqu'à l'extrémité aval de la lèvre.

De préférence, chaque rainure de dégivrage possède aussi une partie amont s'étendant en amont du cadre avant (c'est-à-dire devant le cadre avant suivant la direction de l'axe central de l'entrée d'air), laquelle partie amont communique avec le conduit à section en D. En variante, les rainures de dégivrage ne s'étendent qu'en aval du cadre avant et des moyens de liaison sont prévus entre chaque rainure et le conduit à section en D ou entre chaque rainure et une source d'air chaud (située par exemple plus en aval, à proximité du moteur).

Selon une caractéristique possible de l'invention, la lèvre présente d'autres rainures, dites rainures acoustiques, qui intègrent les zones perforées de la lèvre, les trous d'absorption sonore étant ménagés au fond des rainures acoustiques.

De préférence, les rainures acoustiques ne s'étendent qu'en aval du cadre avant. À noter, si elles s'étendent aussi en amont du cadre avant, qu'elles ne doivent pas communiquer avec le conduit à section en D.

L'intérêt de ces rainures acoustiques est que les trous d'absorption sonores sont ménagés dans des zones où la lèvre présente une épaisseur moindre.

En effet, il est connu que les trous d'absorption sonores doivent avoir un diamètre supérieur (ou éventuellement égal) à l'épaisseur de la paroi perforée. Dans le même temps, plus les trous sont grands, plus ils génèrent de perturbations aérodynamiques (ils influent en particulier sur la traînée). Une épaisseur de paroi plus faible dans les zones perforées permet donc de prévoir des trous plus petits.

Dans une première version possible de l'invention, les rainures de dégivrage sont formées sur la face interne de la lèvre et le clinquant s'étend uniquement en aval du cadre avant, entre la face interne de la lèvre et les panneaux acoustiques. Le clinquant étant défini à la fois comme recouvrant au moins la partie aval des rainures de dégivrage (ce qui signifie que le clinquant s'étend en aval du cadre avant et va au moins, vers l'avant, jusqu'audit cadre avant, et ce, pour toutes les versions de l'invention) et comme ne s'étendant qu'à l'arrière du cadre avant (dans cette première version de réalisation, ce qui signifie que le clinquant "s'arrête" au cadre avant), les rainures de dégivrage communiquent avec le conduit à section en D puisqu'elles ne sont pas recouvertes en amont du cadre avant.

Dans une mode de réalisation préféré de cette première version, la lèvre comporte aussi des rainures acoustiques telles que précédemment définies, et ces rainures acoustiques sont formées elles aussi sur la face interne de la lèvre, en alternance avec les rainures de dégivrage.

Dans une seconde version possible de l'invention :
- les rainures de dégivrage sont formées sur la face externe de la lèvre,
- le clinquant est agencé à l'extérieur de la lèvre de façon à recouvrir la totalité des rainures de dégivrage (c'est-à-dire non seulement leur partie aval mais aussi leur partie amont en amont du cadre avant),
- pour chaque rainure de dégivrage, une ouverture est prévue au fond de la rainure dans la partie amont de celle-ci (de préférence à son extrémité amont) pour que la rainure de dégivrage communique avec le conduit à section en D.

Dans cette seconde version de l'invention, le clinquant forme la face visible du conduit intérieur de l'entrée d'air. Il recouvre les rainures de dégivrage pour former des canaux hermétiques de circulation d'air chaud.

Dans une version préférée de la seconde version de l'invention, la lèvre comporte aussi des rainures acoustiques telles que précédemment définies, et ces rainures acoustiques sont formées sur la face interne de la lèvre, en alternance avec les rainures de dégivrage (qui se trouvent sur l'autre face).

Selon une caractéristique possible de l'invention, les rainures de dégivrage sont rectilignes et s'étendent dans des plans longitudinaux. De préférence, elles présentent une largeur comprise entre 3 et 25 mm.

Selon une caractéristique possible de l'invention, les rainures acoustiques sont rectilignes et s'étendent dans des plans longitudinaux. De préférence, elles présentent une largeur comprise entre 3 et 25 mm.

Selon une caractéristique possible de l'invention, chaque trou d'absorption sonore du clinquant est formé au droit d'un trou d'absorption sonore de la lèvre, et réciproquement.

En pratique, le clinquant et la lèvre sont assemblés avant d'être percés ; ils sont fixés ensemble par exemple par des rivets ou autres fixations le long des bords transversaux du clinquant et par des soudures au laser le long des bords longitudinaux des rainures de dégivrage, puis ils sont perforés ensemble dans les zones prévues pour recevoir les trous d'absorption sonores, par exemple par jet d'eau ou laser. Les panneaux acoustiques peuvent ensuite être intégrés dans la lèvre.

Selon une caractéristique possible de l'invention, les trous d'absorption sonores ont un diamètre compris entre 0,5mm et 1mm.

D'autres détails et avantages de la présente invention apparaîtront à la lecture de la description suivante, qui se réfère aux dessins schématiques annexés et porte sur des modes de réalisation préférentiels, fournis à titre d'exemples non limitatifs.

Le document EP 2578496 A2 divulgue une entrée d'air pour nacelle d'aéronef.

Sur ces dessins :
[Fig. 1] la figure 1 est une vue éclatée, en perspective, d'une entrée d'air de l'art antérieur. Cette entrée d'air est décrite en introduction.
[Fig. 2] la figure 2 est une vue schématique en perspective d'une entrée d'air selon la première version de l'invention, dans laquelle les panneaux acoustiques et le clinquant ont été retirés.
[Fig. 3] la figure 3 est une vue schématique en coupe par un plan transversal, d'une portion de l'entrée d'air de la figure 2.
[Fig. 4] la figure 4 est une vue schématique en perspective d'une entrée d'air selon la seconde version de l'invention, en partie éclatée.
[Fig. 5] la figure 5 est une vue schématique en coupe par un plan transversal, d'une portion de l'entrée d'air de la figure 4,

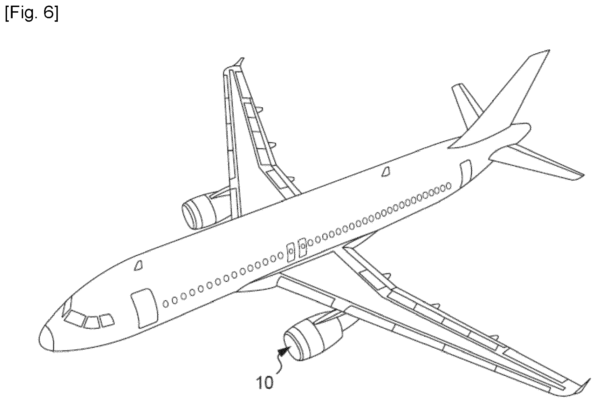

[Fig. 6] la figure 6 est une vue schématique en perspective d'un aéronef dont chaque nacelle présente une entrée d'air selon l'invention.

À noter que, pour des raisons de clarté, le rapport entre les différentes dimensions des éléments représentés n'a pu être respecté. En particulier, l'épaisseur des divers éléments représentés (lèvre, panneau acoustique, etc.) est très exagérée par rapport aux autres dimensions de ces éléments ; de même, la proportion entre le diamètre des trous d'absorption sonore et l'épaisseur de paroi perforée n'est pas respectée sur les coupes transversales.

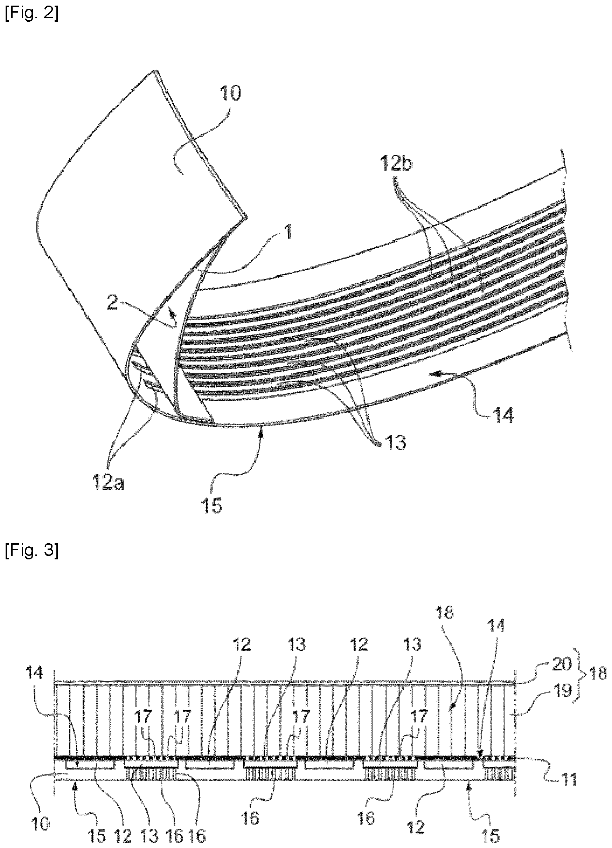

Les figures 2 et 3 montrent des éléments d'une entrée d'air selon l'invention. On y aperçoit notamment un secteur d'un cadre 1 et un secteur d'une lèvre 10 selon le premier mode de réalisation de l'invention. Le secteur de lèvre forme, avec le secteur de cadre, un secteur d'un conduit à section en D 2.

La lèvre 10 est pourvue, sur sa face interne 14, de rainures de dégivrage 12 et de rainures acoustiques 13. Sur la face interne 14 de la lèvre apparaît donc une succession (selon la direction transversale) de tranchées rectilignes longitudinales et de créneaux rectilignes longitudinaux, les tranchées étant en alternance des rainures de dégivrage 12 et des rainures acoustiques 13. À l'opposé, la face externe 15 de la lèvre 10 est lisse (dépourvue de rainures) mais elle présente des zones perforées traversées par des trous d'absorption sonore 16. Ces trous d'absorption sonore 16 sont ménagés uniquement au niveau des rainures acoustiques 13. On peut remarquer sur la figure 2 que les rainures acoustiques 13 s'étendent uniquement en aval du cadre avant 1 tandis que les rainures de dégivrage 12 présentent une partie aval 12b en aval du cadre avant 1 et une partie amont 12a en amont du cadre avant 1.

L'entrée d'air comprend de plus un clinquant 11 (non représenté sur la figure 2 -afin de laisser la face interne rainurée 14 visible-, mais représenté sur la figure 3) plaqué sur la face interne 14 de la lèvre 10, lequel clinquant 11 recouvre entièrement la partie aval 12b des rainures de dégivrage. Le clinquant recouvre également les rainures acoustiques 13, mais est percé, en regard de ces rainures acoustiques 13, de trous d'absorption sonore 17. De préférence, à chaque trou d'absorption sonore 16 de la lèvre 10 correspond un trou d'absorption sonore 17 du clinquant aligné avec le trou d'absorption sonore 16, et réciproquement.

Ceci résulte d'un mode de fabrication préférentiel utilisé ici, dans lequel : une lèvre à face interne crénelée est formée ; un clinquant plein (et dont les deux faces sont lisses) est soudé à la face interne de la lèvre, au niveau des créneaux de celle-ci (sur toute la longueur -et de préférence aussi toute la largeur- des créneaux) par exemple au moyen d'un laser, afin d'obtenir des lignes de soudure hermétique ; les rainures de dégivrage 12 et le clinquant 11 forment alors, en aval du cadre 1 uniquement, des canaux hermétiques dans lesquels pourra circuler de l'air chaud sans risquer d'endommager les panneaux acoustiques 18 (décrits plus loin) ; en amont du cadre 1, ces canaux sont ouverts dans le conduit à section en D 2 ; des trous d'absorption sonores 16 et 17 sont ensuite percés (ensemble) au niveau de chaque rainure acoustique 13 sur toute la longueur (et toute la largeur) desdites rainures, par exemple au moyen d'un laser ou d'un jet d'eau. Le diamètre des trous 16 et 17 est de préférence de l'ordre de 0,6 mm, ce qui est rendu possible parce qu'ils sont réalisés au fond des rainures 13, dans des zones où la lèvre 10 présente une épaisseur moindre, de l'ordre de 0,5 mm par exemple.

La lèvre comprend aussi des panneaux acoustiques 18 (non représentés sur la figure 2 mais visibles sur la figure 3) comportant une âme 19 en nid d'abeille et une peau arrière 20 pleine. Ces panneaux acoustiques 18 sont agencés en aval du cadre 1, en regard des rainures acoustiques de façon à recouvrir entièrement ces dernières. De préférence, les rainures acoustiques 13 s'étendent depuis le cadre avant 1 jusqu'à une extrémité aval de la lèvre 10 ; des trous d'absorption sonores 16 (et 17) et des panneaux acoustiques 18 sont prévus sur toute la longueur des rainures acoustiques 13. En fonction de la position du cadre avant dans la lèvre, il est ainsi possible de traiter acoustiquement jusqu'à 85% de la longueur de l'entrée d'air (étant considéré que la surface intérieure en aval de la lèvre est traitée acoustiquement sur toute sa longueur comme dans l'état de la technique).

La lèvre comprend enfin un ou plusieurs tuyaux longitudinaux (non représentés), ou tout autre moyen approprié, pour amener dans le conduit à section en D 2 de l'air chaud issu du moteur. Cet air chaud circule également, à partir du conduit à section en D 2 dans les rainures de dégivrage 12 (puisque la partie amont 12b de ces rainures n'est pas fermée), ce qui permet de dégivrer la lèvre 10 non seulement au niveau du conduit 2 mais aussi en aval du cadre avant 1, et ce, jusqu'à l'extrémité aval de la lèvre si les rainures de dégivrage s'étendent jusqu'à cette extrémité.

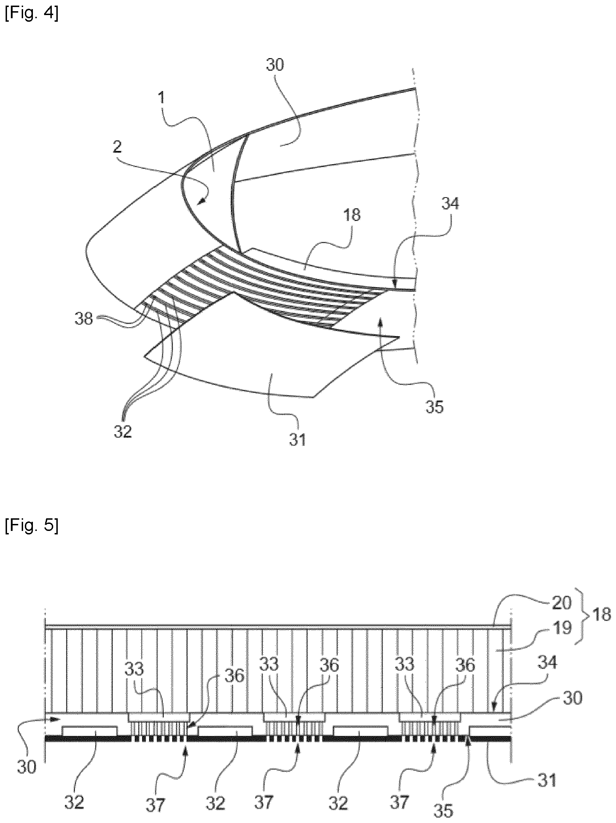

Les figures 4 et 5 montrent des éléments d'une autre entrée d'air selon l'invention. On y aperçoit notamment un secteur de cadre avant 1 similaire à celui précédemment décrit, et un secteur d'une lèvre 30 selon le second mode de réalisation de l'invention. Comme pour le premier mode de réalisation, la lèvre 30 forme, avec le cadre avant 1, un conduit à section en D 2. La lèvre 30 présente une face interne 34 et une face externe 35, toutes deux rainurées en aval du cadre avant 1.

La face interne 34 comprend des rainures acoustiques 33, qui s'étendent uniquement en aval du cadre avant 1, de préférence depuis le cadre avant 1 jusqu'à une extrémité aval de la lèvre 30. Bien que cela ne semble pas présenter d'intérêt, les rainures acoustiques pourraient toutefois être plus courtes, du côté du cadre avant et/ou du côté de l'extrémité aval de la lèvre 30. Les rainures acoustiques 33 ne doivent pas communiquer avec le conduit à section en D 2. C'est pourquoi elles ne s'étendent qu'en aval du cadre avant 1. Le fond des rainures acoustiques 33 est percé de trous d'absorption sonore 36 analogues aux trous 16 précédemment décrits.

La face externe 35 de la lèvre 30 comprend des rainures de dégivrage 32 qui présentent une partie amont en amont du cadre avant 1 et une partie aval en aval du cadre avant 1. De préférence, la partie aval des rainures de dégivrage 32 s'étend longitudinalement depuis le cadre avant 1 jusqu'à l'extrémité aval de la lèvre 30. Cette partie aval pourrait toutefois être plus courte (c'est-à-dire ne pas s'étendre jusqu'à l'extrémité aval de la lèvre 30). Il n'est pas nécessaire que la partie amont des rainures de dégivrage soit très longue puisque la lèvre est dégivrée en amont du cadre avant par l'air chaud qui circule dans le conduit à section en D 2. La partie amont de chaque rainure 32 doit juste avoir une longueur suffisante pour qu'une ouverture 38 soit ménagée dans cette partie aux fins de communication entre la rainure de dégivrage 32 et le conduit à section en D 2.

L'entrée d'air comprend de plus un clinquant 31, qui est représenté à distance de la lèvre 30 sur la figure 4 afin de laisser entrevoir la face externe 35 de la lèvre. Comme on peut l'observer sur la figure 5, le clinquant est en réalité plaqué contre la face externe 35 de la lèvre 30, de façon à recouvrir et fermer hermétiquement et intégralement les rainures de dégivrage 32. En regard des rainures acoustiques 33, le clinquant est percé de trous d'absorption sonore 37 (qui, compte tenu de l'échelle, ne sont pas représentés sur la fig. 4 mais sont visibles sur la fig. 5). De chaque côté des rainures de dégivrage 32, le clinquant 31 n'est pas percé sur une largeur suffisante pour garantir la fermeture hermétique des rainures de dégivrage. Comme pour la première version de l'invention, le clinquant 31 et la lèvre 30 sont percés après avoir été assemblés, de sorte qu'à chaque trou d'absorption sonore 36 de la lèvre correspond un trou d'absorption sonore 37 du clinquant aligné avec le trou d'absorption sonore 36 (et réciproquement).

La lèvre comprend aussi des panneaux acoustiques 18 (représentés à la fois sur la figure 4 et sur la figure 5) comportant une âme 19 en nid d'abeille et une peau arrière 20 pleine. Ces panneaux acoustiques 18 sont agencés en aval du cadre 1, en regard des rainures acoustiques de façon à recouvrir entièrement ces dernières. Les remarques précédemment faites sur ces panneaux acoustiques en référence à la première version de l'invention restent valables pour cette seconde version.

L'invention s'étend à toute variante accessible à l'homme du métier c'est-à-dire entrant dans le cadre délimité par les revendications annexées.

## Revendications

1. Entrée d'air pour nacelle d'aéronef, comprenant un cadre avant (1) et une lèvre (10 ; 30) qui forment ensemble un conduit à section en D (2) recevant de l'air chaud, le cadre avant (1) étant agencé en une position avancée à l'intérieur de la lèvre,
**caractérisée en ce que** :
- la lèvre (10 ; 30) présente des rainures de dégivrage (12 ; 32), chaque rainure de dégivrage communiquant avec le conduit à section en D (2) et ayant une partie aval (12b) s'étendant en aval du cadre avant (1) ;
- en aval du cadre avant (1) en dehors des rainures de dégivrage (12 ; 32), la lèvre (10 ; 30) présente des zones perforées (13 ; 33) pourvues de trous d'absorption sonore (16 ; 36) ;
- l'entrée d'air comprend un clinquant (11 ; 31), qui recouvre et ferme de façon hermétique au moins la partie aval (12b) des rainures de dégivrage, le clinquant étant pourvu de trous d'absorption sonore (17 ; 37) en regard des zones perforées (13 ; 33) et étant plein en regard des rainures de dégivrage (12 ; 32) ;
- l'entrée d'air comprend des panneaux acoustiques (18) à l'intérieur de la lèvre en aval du cadre avant (1) au moins en regard des zones perforées (13 ; 33).

2. Entrée d'air selon la revendication 1, **caractérisée en ce que** chaque rainure de dégivrage possède aussi une partie amont (12a) s'étendant en amont du cadre avant et communiquant avec le conduit à section en D.

3. Entrée d'air selon l'une des revendications 1 ou 2, **caractérisée en ce que** la lèvre (10 ; 30) présente aussi des rainures acoustiques (13 ; 33), qui intègrent les zones perforées de la lèvre, les trous d'absorption sonores (16 ; 36) étant ménagés au fond des rainures acoustiques (13 ; 33).

4. Entrée d'air selon la revendication 3, **caractérisée en ce que** les rainures acoustiques (13 ; 33) ne s'étendent qu'en aval du cadre avant.

5. Entrée d'air selon l'une des revendications 1 à 4, **caractérisée en ce que** les rainures de dégivrage (12) sont formées sur une face interne (14) de la lèvre (10) et le clinquant est agencé entre la face interne (14) de la lèvre et les panneaux acoustiques (18).

6. Entrée d'air selon l'une des revendications 1 à 5, **caractérisée en ce que** le clinquant (11) s'étend uniquement en aval du cadre avant.

7. Entrée d'air selon les revendications 3 et 5, **caractérisée en ce que** les rainures acoustiques (13) sont formées sur la face interne (14) de la lèvre (10), en alternance avec les rainures de dégivrage (12).

8. Entrée d'air selon la revendication 2, **caractérisée en ce que** :
- les rainures de dégivrage (32) sont formées sur une face externe (35) de la lèvre (30),
- le clinquant (31) est agencé à l'extérieur de la lèvre (30) de façon à recouvrir la totalité des rainures de dégivrage (32),
- pour chaque rainure de dégivrage (32), une ouverture (38) est prévue au fond de la rainure dans la partie amont de celle-ci pour que la rainure de dégivrage communique avec le conduit à section en D (2).

9. Entrée d'air selon les revendications 3 et 8, **caractérisée en ce que** les rainures acoustiques (33) sont formées sur une face interne (34) de la lèvre (30), en alternance avec les rainures de dégivrage (32).

10. Entrée d'air selon l'une des revendications 1 à 9, **caractérisée en ce que** les rainures de dégivrage (12 ; 32) sont rectilignes et s'étendent dans des plans longitudinaux.

11. Entrée d'air selon la revendication 3, **caractérisée en ce que** les rainures acoustiques (13 ; 33) sont rectilignes et s'étendent dans des plans longitudinaux.

12. Entrée d'air selon l'une des revendications 1 à 11, **caractérisée en ce que** chaque trou d'absorption sonore (17 ; 37) du clinquant est formé au droit d'un trou d'absorption sonore (16 ; 36) de la lèvre, et réciproquement.

13. Nacelle d'aéronef, **caractérisée en ce qu'**elle comprend une entrée d'air selon l'une des revendications 1 à 12.

14. Ensemble propulsif pour aéronef, **caractérisé en ce qu'**il comprend une entrée d'air selon l'une des revendications 1 à 12.

15. Aéronef **caractérisé en ce qu'**il comprend une entrée d'air selon l'une des revendications 1 à 12.

## Patentansprüche

1. Lufteinlass für eine Luftfahrzeuggondel, umfassend einen vorderen Rahmen (1) und eine Lippe (10; 30), die zusammen einen Kanal (2) mit D-förmigem Querschnitt ausbilden, der heiße Luft aufnimmt, wobei der vordere Rahmen (1) in einer vorgeschobenen Position innerhalb der Lippe angeordnet ist,
**dadurch gekennzeichnet, dass**:
- die Lippe (10; 30) Enteisungsnuten (12; 32) aufweist, wobei jede Enteisungsnut mit dem Kanal (2) mit D-förmigem Querschnitt in Verbindung steht und einen stromabwärtigen Abschnitt (12b) aufweist, der sich stromabwärts des vorderen Rahmens (1) erstreckt;
- die Lippe (10; 30) stromabwärts des vorderen Rahmens (1) außer den Enteisungsnuten (12; 32) perforierte Bereiche (13; 33) aufweist, die mit schallabsorbierenden Löchern (16; 36) versehen sind;
- der Lufteinlass ein Blech (11; 31) umfasst, das zumindest den stromabwärtigen Abschnitt (12b) der Enteisungsnuten bedeckt und hermetisch abschließt, wobei das Blech gegenüber den perforierten Bereichen (13; 33) mit schallabsorbierenden Löchern (17; 37) versehen ist und gegenüber den Enteisungsnuten (12; 32) massiv ist;
- der Lufteinlass zumindest gegenüber den perforierten Bereichen (13; 33) innerhalb der Lippe stromabwärts des vorderen Rahmens (1) Akustikplatten (18) umfasst.

2. Lufteinlass nach Anspruch 1, **dadurch gekennzeichnet, dass** jede Enteisungsnut auch einen stromaufwärtigen Teil (12a) besitzt, der sich stromaufwärts des vorderen Rahmens erstreckt und mit dem Kanal mit D-förmigem Querschnitt in Verbindung steht.

3. Lufteinlass nach einem der Ansprüche 1 oder 2, **dadurch gekennzeichnet, dass** die Lippe (10; 30) auch akustische Rillen (13; 33) aufweist, die die perforierten Bereiche der Lippe beinhalten, wobei die schallabsorbierenden Löcher (16; 36) im Boden der akustischen Rillen (13; 33) vorgesehen sind.

4. Lufteinlass nach Anspruch 3, **dadurch gekennzeichnet, dass** sich die akustischen Rillen (13; 33) nur stromabwärts des vorderen Rahmens erstrecken.

5. Lufteinlass nach einem der Ansprüche 1 bis 4, **dadurch gekennzeichnet, dass** die Enteisungsnuten (12) auf einer Innenseite (14) der Lippe (10) ausgebildet sind und das Blech zwischen der Innenseite (14) der Lippe und den Akustikplatten (18) angeordnet ist.

6. Lufteinlass nach einem der Ansprüche 1 bis 5, **dadurch gekennzeichnet, dass** sich das Blech (11) nur stromabwärts des vorderen Rahmens erstreckt.

7. Lufteinlass nach Anspruch 3 und 5, **dadurch gekennzeichnet, dass** die akustischen Rillen (13) auf der Innenseite (14) der Lippe (10) abwechselnd mit den Enteisungsnuten (12) angeordnet sind.

8. Lufteinlass nach Anspruch 2, **dadurch gekennzeichnet, dass**:
- die Enteisungsnuten (32) auf einer Außenseite (35) der Lippe (30) ausgebildet sind,
- das Blech (31) außerhalb der Lippe (30) angeordnet ist, so dass es alle Enteisungsnuten (32) bedeckt,
- für jede Enteisungsnut (32) am Boden der Rille in ihrem stromaufwärtigen Teil eine Öffnung (38) vorgesehen ist, damit die Enteisungsnut mit dem Kanal (2) mit D-förmigem Querschnitt in Verbindung steht.

9. Lufteinlass nach Anspruch 3 und 8, **dadurch gekennzeichnet, dass** die akustischen Rillen (33) auf einer Innenseite (34) der Lippe (30) abwechselnd mit den Enteisungsnuten (32) angeordnet sind.

10. Lufteinlass nach einem der Ansprüche 1 bis 9, **dadurch gekennzeichnet, dass** die Enteisungsnuten (12; 32) geradlinig sind und sich in Längsebenen erstrecken.

11. Lufteinlass nach Anspruch 3, **dadurch gekennzeichnet, dass** die akustischen Rillen (13; 33) geradlinig sind und sich in Längsebenen erstrecken.

12. Lufteinlass nach einem der Ansprüche 1 bis 11, **dadurch gekennzeichnet, dass** jedes schallabsorbierende Loch (17; 37) des Blechs direkt an einem schallabsorbierenden Loch (16; 36) der Lippe ausgebildet ist und umgekehrt.

13. Luftfahrzeuggondel, **dadurch gekennzeichnet, dass** sie einen Lufteinlass nach einem der Ansprüche 1 bis 12 umfasst.

14. Antriebseinheit eines Luftfahrzeugs, **dadurch gekennzeichnet, dass** sie einen Lufteinlass nach einem der Ansprüche 1 bis 12 umfasst.

15. Luftfahrzeug, **dadurch gekennzeichnet, dass** es einen Lufteinlass nach einem der Ansprüche 1 bis 12 umfasst.

## Claims

1. Air inlet for an aircraft nacelle, comprising a front frame (1) and a lip (10; 30) which together form a duct with D-shaped section (2) receiving hot air, the front frame (1) being arranged in an advanced position inside the lip,
**characterized in that**:
- the lip (10; 30) has de-icing grooves (12; 32), each de-icing groove communicating with the duct with D-shaped section (2) and having a downstream part (12b) extending downstream of the front frame (1) ;
- downstream of the front frame (1) outside of the de-icing grooves (12; 32), the lip (10; 30) has perforated zones (13; 33) provided with sound absorption holes (16; 36);
- the air inlet comprises a foil (11; 31), which covers and hermetically seals at least the downstream part (12b) of the de-icing grooves, the foil being provided with sound absorption holes (17; 37) facing the perforated zones (13; 33) and being solid facing the de-icing grooves (12; 32);
- the air inlet comprises acoustic panels (18) inside the lip downstream of the front frame (1) at least facing the perforated zones (13; 33).

2. Air inlet according to Claim 1, **characterized in that** each de-icing groove also has an upstream part (12a) extending upstream of the front frame and communicating with the duct with D-shaped section.

3. Air inlet according to one of Claims 1 and 2, **characterized in that** the lip (10; 30) also has acoustic grooves (13; 33), which incorporate the perforated zones of the lip, the sound absorption holes (16; 36) being formed at the bottom of the acoustic grooves (13; 33).

4. Air inlet according to Claim 3, **characterized in that** the acoustic grooves (13; 33) extend only downstream of the front frame.

5. Air inlet according to one of Claims 1 to 4, **characterized in that** the de-icing grooves (12) are formed on an inner face (14) of the lip (10) and the foil is arranged between the inner face (14) of the lip and the acoustic panels (18).

6. Air inlet according to one of Claims 1 to 5, **characterized in that** the foil (11) extends only downstream of the front frame.

7. Air inlet according to Claims 3 and 5, **characterized in that** the acoustic grooves (13) are formed on the inner face (14) of the lip (10), alternating with the de-icing grooves (12).

8. Air inlet according to Claim 2, **characterized in that**:
- the de-icing grooves (32) are formed on an outer face (35) of the lip (30),
- the foil (31) is arranged outside the lip (30) so as to cover all of the de-icing grooves (32),
- for each de-icing groove (32), an opening (38) is provided at the bottom of the groove in the upstream part thereof for the de-icing groove to communicate with the duct with D-shaped section (2).

9. Air inlet according to Claims 3 and 8, **characterized in that** the acoustic grooves (33) are formed on an inner face (34) of the lip (30), alternating with the de-icing grooves (32).

10. Air inlet according to one of Claims 1 to 9, **characterized in that** the de-icing grooves (12; 32) are rectilinear and extend in longitudinal planes.

11. Air inlet according to Claim 3, **characterized in that** the acoustic grooves (13; 33) are rectilinear and extend in longitudinal planes.

12. Air inlet according to one of Claims 1 to 11, **characterized in that** each sound absorption hole (17; 37) of the foil is formed in line with a sound absorption hole (16; 36) of the lip, and vice versa.

13. Aircraft nacelle, **characterized in that** it comprises an air inlet according to one of Claims 1 to 12.

14. Propulsive assembly for aircraft, **characterized in that** it comprises an air inlet according to one of Claims 1 to 12.

15. Aircraft, **characterized in that** it comprises an air inlet according to one of Claims 1 to 12.
